(19) **Europäisches Patentamt / European Patent Office / Office européen des brevets**

(11) **EP 3 421 953 B1**

(12) # EUROPEAN PATENT SPECIFICATION

(45) Date of publication and mention of the grant of the patent:
**06.01.2021 Bulletin 2021/01**

(21) Application number: **16921303.0**

(22) Date of filing: **25.11.2016**

(51) Int Cl.:
*G01J 3/28* (2006.01)  *G01M 11/00* (2006.01)
*G01J 1/02* (2006.01)  *G01J 1/04* (2006.01)
*G01J 1/08* (2006.01)  *G01J 1/42* (2006.01)
*G01J 3/02* (2006.01)  *G01J 3/10* (2006.01)
*G01J 3/12* (2006.01)

(86) International application number:
**PCT/CN2016/107242**

(87) International publication number:
**WO 2018/086161 (17.05.2018 Gazette 2018/20)**

(54) **MEASUREMENT DEVICE AND METHOD FOR SPECTRAL RESPONSIVITY OF LARGE-APERTURE RADIOMETER**

MESSVORRICHTUNG UND VERFAHREN ZUR SPEKTRALEN EMPFINDLICHKEIT EINES RADIOMETERS MIT GROSSER APERTUR

DISPOSITIF ET PROCÉDÉ DE MESURE DE SENSIBILITÉ SPECTRALE D'UN RADIOMÈTRE À GRANDE OUVERTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2016 CN 201610998172**

(43) Date of publication of application:
**02.01.2019 Bulletin 2019/01**

(73) Proprietor: **The 41st Institute of China Electronics Technology Group Corporation Qingdao, Shandong 266000 (CN)**

(72) Inventors:
  • **ZHAO, Facai**
    **Qingdao**
    **Shandong 266000 (CN)**
  • **SUN, Quanshe**
    **Qingdao**
    **Shandong 266000 (CN)**
  • **WANG, Shaoshui**
    **Qingdao**
    **Shandong 266000 (CN)**
  • **WANG, Guoqquan**
    **Qingdao**
    **Shandong 266000 (CN)**
  • **ZHENG, Xiangliang**
    **Qingdao**
    **Shandong 266000 (CN)**
  • **HAN, Zhong**
    **Qingdao**
    **Shandong 266000 (CN)**

(74) Representative: **Bandpay & Greuter
30, rue Notre-Dame des Victoires
75002 Paris (FR)**

(56) References cited:
**CN-A- 102 384 841    CN-A- 102 486 404
CN-A- 102 519 594    CN-A- 102 519 594
CN-A- 102 829 868    CN-A- 102 829 868
CN-A- 104 142 226    CN-A- 105 571 834
US-A1- 2014 247 442**

  • **SKEROVIC V ET AL: "Developement of the method for realization of spectral irradiance scale featuring system of spectral comparisons", JOURNAL OF INSTRUMENTATION, INSTITUTE OF PHYSICS PUBLISHING, BRISTOL, GB, vol. 5, no. 10, 5 October 2010 (2010-10-05), page P10001, XP020199001, ISSN: 1748-0221, DOI: 10.1088/1748-0221/5/10/P10001**

EP 3 421 953 B1

**Description**

TECHNICAL FIELD

The present invention relates to the field of optical metrology test, in particular to a device and method of measuring the spectral responsivity of a large-diameter radiometer.

BACKGROUND

The measurement of spectral responsivity is mainly used for measuring the spectral responsivity curve of a certain band of a photodetector or optoelectronic instrument, for determining whether the spectral responsivity curve meets the user's requirements and applying the actual spectral responsivity curve for the data inversion and target discrimination. The spectral responsivity feature of the complete unit system is one of the most important characteristics of the optoelectronic instruments and a comprehensive reflection of the detection capability of the instrument.

The space optical cameras are one of the most important electro-optical payloads in the field of space optical remote sensing technology. They may be mounted on a wide range of aircrafts and can monitor the development of the military installations and strategic weapons and the change of the military situations in the conflicting and crisis regions through shooting from the air without the constraints from the reach from the visible light to the shortwave infrared ray. The space optical cameras can also be widely used in civilian areas such as precision mapping, urban planning, land use, resource management, environmental monitoring and geographic information services to promote the development of the national economy. In the space optical calibration device, the calibration of the spectral responsivity of the cameras is realized by using a large-diameter radiometer that matches the diameter of the cameras. However, at present, the item-by-item traceability method is used by the space optical camera research and development entities in China to solve the problem of the measurement traceability of the large-diameter spectroradiometers, namely, the method calculates the spectral responsivity of large-diameter spectroradiometers by calibrating the detector spectral responsivity and the optical system reflectivity or transmissivity respectively. This item-by-item traceability method increases the measurement uncertainty of the spectral responsivity of the large-diameter radiometer.

The relative spectral responsivity of an optoelectronic instrument system may be obtained with the item-by-item measurement calculation method or the actual measurement method. The item-by-item measurement calculation method refers to a method that the spectral responsivity of each optical component (including a mirror, a lens and a window) and detector through which the signal light passes in the system is measured separately based on the wavelength and then is multiplied one by one before being normalized to obtain the relative spectral responsivity of the system. This method features a high theoretical level and simple algorithm. However, whether the component is a mirror or a lens, most of the data that is input during the calculation is the data at the time of normal incidence. This method neither considers the differences of different wavelengths in the actual transmissivity and actual reflectivity caused due to different angles of incidence under the actual conditions of the full diameter nor considers the actual influences from the optical system polarization, stray light and other factors. The measured system spectral responsivity just can make up for this shortage so as to get the true value of spectral responsivity. However, at present, in the methods of measuring the spectral responsivity of a large-diameter radiometer, the spectral responsivity of a large-diameter spectroradiometer is mainly obtained by the item-by-item measurement calculation method. Although the prior art shows a method of testing the spectral responsivity of a complete unit, the problem of influence from the auxiliary optical system is not solved and only the relative spectral responsivity can be measured.

Document CN 102 829 868 A discloses a method of absolute radiometric calibration, related in particular to a method of imaging spectrometer pin-point accuracy absolute radiometric calibration.

Document CN 102 519 594 A discloses a measuring system for measuring spectral radiance of a large diameter parallel light beam wherein a movable diaphragm is used together with a scan mirror in order to measure irradiance through a large parallel beam.

Document CN 105 571 834 A discloses particularly a CCD device quantum efficiency measuring device.

Document CN 102 486 404 A discloses a camera optics system performance index and magnitude scale fixed system, related in particular to a kind of ultraviolet low light level magnitude simulated calibration system.

Document SKEROVIC V ET AL: "Developement of the method for realization of spectral irradiance scale featuring system of spectral comparisons" discloses the development of a method including realization of the System of Spectral Comparisons (SSC), together with the detector spectral responsivity calibrations by means of a primary spectrophotometric system.

SUMMARY OF THE INVENTION

At present, in the methods of measuring the spectral responsivity of a large-diameter radiometer, the spectral responsivity of a large-diameter spectroradiometer is mainly obtained by the item-by-item measurement calculation method. This method neither considers the differences of different wavelengths in the actual transmissivity and actual reflectivity caused due to different angles of incidence under the actual conditions of the full diameter nor considers the actual influences from the optical system polarization, installation & commissioning, stray light and other factors. According to the deficiencies of the prior arts, the present invention provides a method according to claim 1.

Preferably, the said large-diameter monochromatic parallel light source (1) is composed of a tungsten-halogen light source (11), a focusing system (12), a filter system (13), a monochromator (14), an integrating sphere (15) and a collimation system (16); the emergent beam of the tungsten-halogen light source (11) is converged by the focusing system (12) and then enters the entrance slit of the monochromator (14) and the f-number of the said focusing system (12) matches the f-number of the optical system of the said monochromator (14); the incident beam is divided by the monochromator (14), passes through the exit slit of the monochromator (14) and enters the small-diameter integrating sphere (15) with an outlet located at the focal point of the collimation system (16) and is expanded by the collimation system (16) and then converted to large-diameter parallel lights and the f-number of the said collimation system (16) matches the f-number of the optical system of the monochromator (14).

Preferably, a filter system (13) is provided in front of the entrance slit of the said monochromator (14).

Preferably, the said beam scanning detection device (2) comprises a diaphragm (21), a standard detector (22) and a motorized three-dimensional translation stage (23); the said diaphragm (21) is located in front of the standard detector (22) and used for limiting the size of the test beam; the said standard detector detects the optical power of the small-diameter parallel beams that have passed through the diaphragm; the said motorized three-dimensional translation stage (23) is used for controlling the position of the diaphragm (21) and the standard detector (22) and has a stroke that depends on the path length of the scan, that is, the diameter of the emergent beam of the large-diameter parallel light source (1). Preferably, the said standard detector (22) may be separately moved out of the optical path. Preferably, the said diaphragm (21) is selected based on the entrance pupil diameter of the large-diameter radiometer to be measured (6).

The device and method of measuring the spectral responsivity of a large-diameter radiometer according to the present invention have the following advantages:

(1) They can realize the measurement of the absolute spectral responsivity of a large-diameter radiometer with the small-diameter beam scanning detection method;
(2) They overcome the difficulty that the item-by-item measurement calculation method has in evaluating the influences from the installation & commissioning, stray light and other factors of the optical system;
(3) They can realize the measurement for a measured large-diameter radiometer with the comparison method through establishing a set of standard large-diameter radiometers, thus realizing a simple and convenient method of measuring the spectral responsivity of a large-diameter radiometer.

**BRIEF DESCRIPTION OF DRAWINGS**

FIG. 1 illustrates a schematic view of the structure of the device of measuring a standard large-diameter radiometer according to the present invention;
FIG. 2 illustrates a schematic view of the structure of the device of measuring a large-diameter radiometer to be measured according to the present invention;
FIG. 3 illustrates a schematic view of the structure of a large-diameter monochromatic parallel light source according to the present invention;
FIG. 4 illustrates a schematic view of the structure of the beam scanning detection device according to the present invention;
FIG. 5 illustrates a schematic view of the scanning process when the beam scanning detection device according to the present invention performs beam scanning.

**SPECIFIC EMBODIMENTS**

The present invention will be further described below with reference to the drawings and embodiments:

Embodiment 1:

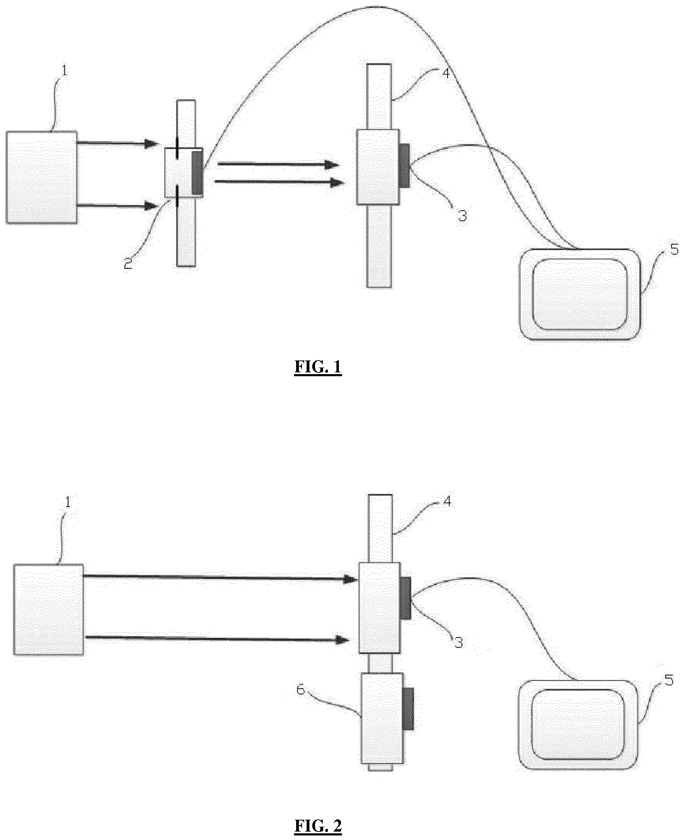

As shown in FIGs. 1 and 2, the device of measuring the spectral responsivity of a large-diameter radiometer of this embodiment is used for measuring a large-diameter radiometer to be measured 6 and comprises a large-diameter monochromatic parallel light source 1, a beam scanning detection device 2, a standard large-diameter radiometer 3, a motorized translation stage 4 and a processing computer 5.

The large-diameter monochromatic parallel light source 1 is used for outputting the large-diameter monochromatic parallel beams which pass through the beam scanning detection device 2 and then pass through the standard large-diameter radiometer 3 or large-diameter radiometer to be measured 6 mounted on the motorized translation stage 4 in parallel.

The beam scanning detection device 2 is used to measure the optical power of the said large-diameter monochromatic parallel beams.

The outputs of the beam scanning detection device 2, standard large-diameter radiometer 3 and large-diameter radiometer to be measured 6 are connected to the input of the processing computer 5 which is used for calculating the spectral responsivity of the standard large-diameter radiometer 3 and the large-diameter radiometer to be measured 6. The measurement result of the spectral responsivity of the standard large-diameter radiometer 3 provides a comparison standard for the measurement result of the spectral responsivity of the said large-diameter radiometer to be measured 6.

The motorized translation stage 4 is used for changing the positions of the standard large-diameter radiometer 3 and the large-diameter radiometer to be measured 6.

Embodiment 2:

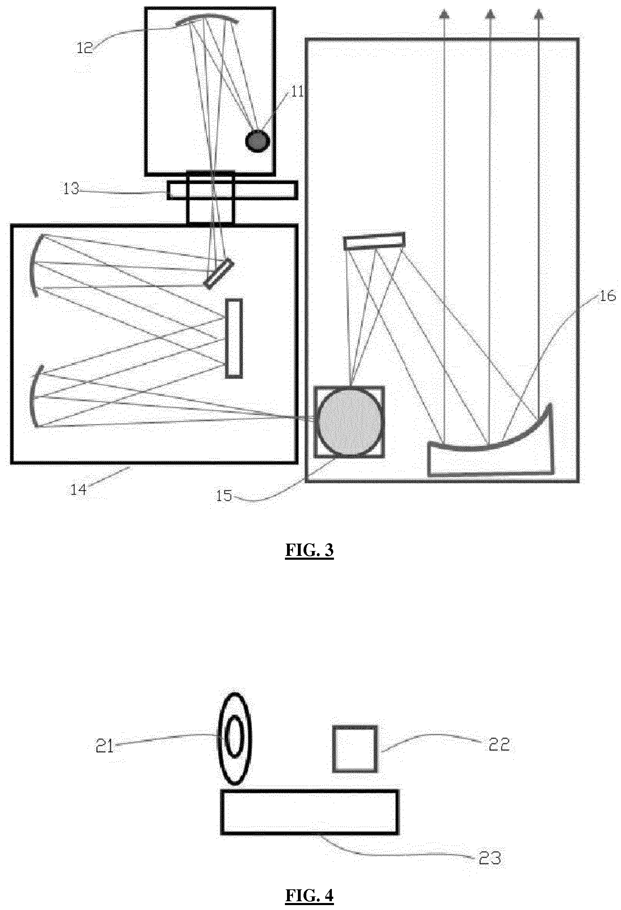

As shown in FIG. 3, on the basis of Embodiment 1, the large-diameter monochromatic parallel light source 1 in this embodiment comprises a tungsten-halogen light source 11, a focusing system 12, a filter system 13, a monochromator 14, an integrating sphere 15 and a collimation system 16.

The emergent beam of the tungsten-halogen light source 11 is converged by the focusing system 12 and then enters the entrance slit of the monochromator 14 and the f-number of the focusing system 12 matches the f-number of the optical system of the said monochromator 14 so that the monochromator obtains the optimal performance.

The incident beam is divided by the monochromator 14, then passes through the exit slit of the monochromator 14 and enters the small-diameter integrating sphere 15 so as to improve the uniformness of the emergent beam.

The outlet of the integrating sphere 15 is located at the focal point of the collimation system 16, the beam is expanded by the collimation system 16 and then converted to large-diameter parallel lights and the f-number of the said collimation system 16 matches the f-number of the optical system of the said monochromator 14.

A filter system 13 is provided in front of the entrance slit of the monochromator 14 and can control the wavelength range of the transmitted beams to reduce the effect of multi-order diffraction of the monochromator.

Wherein, the monochromator adopts C-T structure design, has a spectral range of 400-1000nm, a spectral resolution of 0.2nm, a wavelength accuracy of 2nm, an optical system f-number of 4, an integrating sphere inner diameter of 50mm, a maximum opening diameter of 10mm, a rear mounted collimation system focus of 1200mm and an effective diameter of 300mm.

Embodiment 3:

As shown in FIG. 4, on the basis of Embodiment 1 or 2, the beam scanning detection device 2 in this embodiment comprises a diaphragm 21, a standard detector 22 and a motorized three-dimensional translation stage 23.

The diaphragm 21 is located in front of the standard detector 22 and used for limiting the size of the test beam; the standard detector detects the optical power of the small-diameter parallel beams that have passed through the diaphragm.

The motorized three-dimensional translation stage 23 is used for controlling the position of the diaphragm 21 and the standard detector 22 and has a stroke that depends on the path length of the scan, that is, the diameter of the emergent beam of the large-diameter parallel light source 1.

Wherein, the standard detector 22 may be separately moved out of the optical path and the diaphragm 21 is selected based on the entrance pupil diameter of the large-diameter radiometer to be measured 6. The diaphragm has an entrance pupil diameter D=10mm, the standard detector is equipped with Model S2281 Hamamatsu photodiodes and the motorized three-dimensional translation stage has a horizontal and vertical measurement range of 400mm and a resolution of 5$\mu$m.

Embodiment 4:

On the basis of Embodiment 1 or 2 or 3, the standard large-diameter radiometer in this embodiment adopts a snap-in structure design and has a spectral range of 400-1100nm, an effective entrance pupil diameter of more than 300 mm, a focal length of 1500mm and a field of view of 0.4°.

Embodiment 5:

This embodiment is a method of measuring the spectral responsivity of a large-diameter radiometer that performs such measurement using a device of measuring the spectral responsivity of the large-diameter radiometer according to any of Embodiments 1-4, comprising the following steps:

Step 1: Measure the optical power of the emergent beam of the large-diameter monochromatic parallel light source (1);

As shown in FIG. 1, adjust the optical path, turn on the power supply of the tungsten-halogen light source 11, set the output wavelength and spectral resolution of the monochromator 14, place the beam scanning detection device 2 right in front of the emergent parallel beams; as shown in FIG. 4, adjust the beam scanning detection device 2 so that the parallel beams pass through the diaphragm 21 in a vertical way; the processing computer 5 controls the optical power $\varphi1$ ($\lambda$), as detected by the standard detector 22, of the small-diameter parallel beams that have passed through the diaphragm 21;

Step 2: Measure the output signal of the standard large-diameter radiometer 3.

Adjust the standard detector 22 in the beam scanning detection device 2 so that it is moved out of the optical path, in which case, the small-diameter parallel beams that have passed through the diaphragm 21 enters the standard large-diameter radiometer 3 in such a way that its diameter and position are the same as those of the beam as described in Step 1; the processing computer 5 controls the output signal $S_2(\lambda)$ of the standard large-diameter radiometer 3.

Step 3: Measure and calculate the spectral responsivity under the illumination of the small-diameter parallel beams of a standard large diameter radiometer 3.

According to Steps 1 and 2, the spectral responsivity of a standard large-diameter radiometer 3 under the illumination of the small-diameter parallel beams can be calculated as:

$$R(\lambda) = \frac{S_2(\lambda)}{\varphi_1(\lambda)}$$

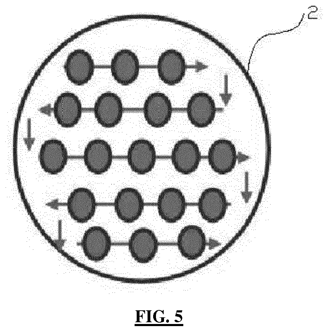

Step 4: Adjust the position of the beam scanning detection device 2 and measure the spectral responsivity at other positions within the entrance pupil diameter of the standard large-diameter radiometer 3. The scanning process is as shown in FIG. 5. The position of the motorized three-dimensional translation stage 23 in the beam scanning detection device 2 is adjusted in such a way that the projection of the test beam starts from the upper left corner of the beam scanning detection device 2, moves horizontally farthest to the right side, moves down by one line, then moves horizontally farthest to the left side and then moves down by another line and you should repeat these actions until the projection of the test beam moves to the lower right corner of the beam scanning detection device 2.

Adjust the position of the motorized three-dimensional translation stage 23 in the beam scanning detection device 2 and repeat Steps 1, 2 and 3 to obtain the spectral responsivity at other positions in the entrance pupil diameter of the standard large-diameter radiometer 3:

$$R'(\lambda) = \frac{S_2'(\lambda)}{\varphi_1'(\lambda)}$$

Step 5: Calculate the full-diameter spectral responsivity of the standard large-diameter radiometer 3:

$$\overline{R_s(\lambda)} = \sum (\rho \cdot R(\lambda))/N$$

where, p is the weight factor and N is the total number of measurement points.

Step 6: Measure and calculate the spectral responsivity of a large-diameter radiometer to be measured 6;

Readjust the test optical path as shown in FIG. 2, set the output wavelength and spectral resolution of the monochromator 14 according to the working band range and test requirements of the large-diameter radiometer to be measured 6, place the standard large-diameter radiometer 3 right in front of the emergent parallel beams and adjust the standard large-diameter radiometer 3 so that its optical axis is consistent with the emergent parallel beams of the large-diameter monochromatic light source 1; the processing computer 5 controls and records the output signal $S_t(\lambda)$ of the standard large-diameter radiometer 3. The motorized translation stage 4 controls the entrance optical path of the large-diameter radiometer to be measured 6; after adjustment, reocrd the output signal $S_m(\lambda)$ of the large-diameter radiometer to be measured 6.

Then, the spectral responsivity of the large-diameter radiometer to be measured 6 is expressed as:

$$R_m(\lambda) = \frac{S_t(\lambda)}{S_m(\lambda)} \cdot \overline{R_s(\lambda)}$$

The above-mentioned description of the disclosed embodiments enables those technicians skilled in the art to implement or use the invention and several modifications to these embodiments will be readily apparent to those technicians skilled in the art.

## Claims

1. A method of measuring the spectral responsivity of a large-diameter radiometer that performs such measurement using a device of measuring the spectral responsivity of a large-diameter radiometer, wherein it comprises the following steps:

S1: Measure the optical power of the emergent beam of a large-diameter monochromatic parallel light source (1);
Turn on the power supply of a tungsten-halogen light source (11), set the output wavelength and spectral resolution of a monochromator (14), place a beam scanning detection device (2) right in front of emergent parallel beams and adjust the beam scanning detection device (2) so that the parallel beams pass through a diaphragm (21) in a vertical way; a processing computer (5) controls the optical power $\varphi_1(\lambda)$, as detected by a standard detector (22), of the small-diameter parallel beams that have passed through the diaphragm (21);
S2: Measure the output signal of the standard large-diameter radiometer (3);
Adjust the standard detector (22) in the beam scanning detection device (2) so that it is moved out of the optical path, in which case, the small-diameter parallel beams that have passed through the diaphragm (21) enter the standard large-diameter radiometer (3) in such a way that its diameter and position are the same as those of the beam as described in Step S1 and the processing computer (5) controls the output signal $S_2(\lambda)$ of the standard large-diameter radiometer (3);

S3: Measure and calculate the spectral responsivity under the illumination of the small-diameter parallel beams of a standard large-diameter radiometer (3);

According to Steps S1 & S2, the spectral responsivity of a standard large-diameter radiometer (3) under the illumination of the small-diameter parallel beams can be calculated as

$$R(\lambda) = \frac{S_2(\lambda)}{\varphi_1(\lambda)}$$

S4: Adjust the position of the beam scanning detection device (2) and measure the spectral responsivity at other positions within the entrance pupil diameter of the standard large-diameter radiometer (3); Adjust the position of a motorized three-dimensional translation stage (23) in the beam scanning detection device (2) and repeat Steps S1, S2 and S3 to obtain the spectral responsivity at other positions in the entrance pupil diameter of the standard large-diameter radiometer (3)

$$R'(\lambda) = \frac{S'_2(\lambda)}{\varphi'_1(\lambda)}$$

S5: Calculate the full-diameter spectral responsivity of the standard large-diameter radiometer (3):

$$\overline{R_s(\lambda)} = \sum(\rho \cdot R(\lambda))/N$$

where, p is the weight factor and $N$ is the total number of measurement points;

S6: Measure and calculate the spectral responsivity of a large-diameter radiometer to be measured (6);

Set the output wavelength and spectral resolution of the monochromator (14) according to the working band range and test requirements of the large-diameter radiometer to be measured (6), place the standard large-diameter radiometer (3) right in front of the emergent parallel beams and adjust the standard large-diameter radiometer (3) so that its optical axis is consistent with the emergent parallel beams of the large-diameter monochromatic light source (1); the processing computer (5) controls and records the output signal $S_t(\lambda)$ of the standard large-diameter radiometer (3) and the motorized translation stage (4) controls the entrance optical path of the large-diameter radiometer to be measured (6); after adjustment, the output signal $S_m(\lambda)$ of the large-diameter radiometer to be measured (6) is recorded, then, the spectral responsivity of the large-diameter radiometer to be measured (6)is expressed as:

$$R_m(\lambda) = \frac{S_t(\lambda)}{S_m(\lambda)} \cdot \overline{R_s(\lambda)}.$$

2. A method of measuring the spectral responsivity of a large-diameter radiometer according to claim 1, wherein Steps S2, S3, S4 and S5 above may be omitted after the first use and need to be re-performed after a period of use.

3. A method of measuring the spectral responsivity of a large-diameter radiometer according to claim 1, wherein the position of the motorized three-dimensional translation stage (23) in the beam scanning detection device (2) in Step S4 is adjusted in such a way that the projection of the test beam starts from the upper left corner of the beam scanning detection device (2), moves horizontally farthest to the right side, moves down by one line, then moves horizontally farthest to the left side and then moves down by another line and repeating these actions until the projection of the test beam moves to the lower right corner of the beam scanning detection device (2).

4. A method of measuring the spectral responsivity of a large-diameter radiometer according to any one of claims 1 to 3, wherein the device of measuring comprises the large-diameter monochromatic parallel light source (1), the beam scanning detection device (2), the standard large diameter radiometer (3), the motorized translation stage (4) and the processing computer (5);

- the said large-diameter monochromatic parallel light source (1) is used for outputting the large diameter monochromatic parallel beams which pass through the beam scanning detection device (2) and then pass through the standard large-diameter radiometer (3) or large-diameter radiometer to be measured (6) mounted on the motorized translation stage (4) in parallel;
- the said beam scanning detection device (2) is used to measure the optical power of the said large diameter monochromatic parallel beams;
- the outputs of the said beam scanning detection device (2), standard large-diameter radiometer (3) and large-diameter radiometer to be measured (6) are connected to the input of the said processing computer (5) which is used for calculating the spectral responsivity of the said standard large diameter radiometer (3) and the said large-diameter radiometer to be measured (6);

- the measurement result of the spectral responsivity of the said standard large-diameter radiometer (3) provides a comparison standard for the measurement result of the spectral responsivity of the said large-diameter radiometer to be measured (6);

- the said motorized translation stage (4) is used for changing the positions of the said standard large-diameter radiometer (3) and the said large-diameter radiometer to be measured (6).

5. The method of measuring according to claim 4, wherein the said large-diameter monochromatic parallel light source (1) is composed of a tungsten-halogen light source (11), a focusing system (12), a filter system (13), a monochromator (14), an integrating sphere (15) and a collimation system (16); the emergent beam of the tungsten-halogen light source (11) is converged by the focusing system (12) and then enters the entrance slit of the monochromator (14) and the f-number of the said focusing system (12) matches the f-number of the optical system of the said monochromator (14); the incident beam is divided by the monochromator (14), then passes through the exit slit of the monochromator (14) and enters the small-diameter integrating sphere (15) with an outlet located at the focal point of the collimation system (16) and is expanded by the collimation system (16) and then converted to large-diameter parallel lights and the f-number of the said collimation system (16) matches the f-number of the optical system of the monochromator (14).

6. The method of measuring according to claim 5, wherein a filter system (13) is provided in front of the entrance slit of the said monochromator (14).

7. The method of measuring the spectral responsivity of a large-diameter radiometer according to claim 4 or 5 or 6, wherein the said beam scanning detection device (2) comprises a diaphragm (21), a standard detector (22) and a motorized three-dimensional translation stage (23); the said diaphragm (21) is located in front of the standard detector (22) and used for limiting the size of the test beam; the said standard detector detects the optical power of the small-diameter parallel beams that have passed through the diaphragm; the said motorized three-dimensional translation stage (23) is used for controlling the position of the diaphragm (21) and the standard detector (22) and has a stroke that depends on the path length of the scan, that is, the diameter of the emergent beam of the large-diameter parallel light source (1).

8. The method of measuring the spectral responsivity of a large-diameter radiometer according to claim 7, wherein the said standard detector (22) may be separately moved out of the optical path.

9. The method of measuring the spectral responsivity of a large-diameter radiometer according to claim 7, wherein the said diaphragm (21) is selected based on the entrance pupil diameter of the large-diameter radiometer to be measured (6).

**Patentansprüche**

1. Verfahren zum Messen der spektralen Empfindlichkeit eines Großdurchmesser-Radiometers, der diese Messung unter Einsatz einer Vorrichtung zur Messung der spektralen Empfindlichkeit eines Großdurchmesser-Radiometers vornimmt, wobei das Verfahren die Schritte umfasst:

S1: Messen der optischen Leistung des austretenden Strahls einer monochromatischen Großdurchmesser-Parallellichtquelle (1); Anschalten der Stromversorgung einer Wolfram-Halogen-Lichtquelle (11), Einstellen der Ausgangswellenlänge und der spektralen Auflösung eines Monochromators (14), Positionieren eines Strahlabtastungs-Detektionsgeräts (2) direct vor austretenden Parallelstrahlen und Anpassen des Geräts (2), so dass die Parallelstrahlen eine Membran (21) vertikal durchqueren; ein Verarbeitungsrechner (5) steuert die von einem Standarddetektor (22) erkannte optische Leistung $\varphi1(\lambda)$ der Kleindurchmesser-Parallelstrahlen, die durch die Membran (21) gelaufen sind; S2: Messen des Ausgangssignals des Großdurchmesser-Standardradiometers (3); Anpassen des Standarddetektors (22) im Strahlabtastung-Detektionsgerät (2), so dass dieser weg vom Strahlengang bewegt wird; in diesem Fall treten die Kleindurchmesser-Parallelstrahlen, die durch die Membran (21) gelaufen sind, in den Großdurchmesser-Standardradiometer (3) derart ein, dass dessen Durchmesser und Lage gleich denen des im Schritt S1 beschriebenen Strahls sind, und der Rechner (5) steuert das Ausgangssignal $S2(\lambda)$ des Großdurchmesser-Standardradiometers (3); S3: Messen und Berechnen der spektralen Empfindlichkeit unter der Beleuchtung der Kleindurchmesser-Parallelstrahlen eines Großdurchmesser-Standardradiometers (3); Gemäß den Schritten S1 und S2 kann die spektrale Empfindlichkeit eines Großdurchmesser-Standardradiometers (3) unter der Beleuchtung der Kleindurchmesser-Parallelstrahlen wie folgt berechnet werden:

$$R(\lambda) = \frac{S_2(\lambda)}{\varphi_1(\lambda)}$$

S4: Anpassen der Lage des Strahlabtastungs-Detektionsgeräts (2) und Messen der spektralen Empfindlichkeit in anderen Positionen des Eintrittspupillendurchmessers des Großdurchmesser-Standardradiometers (3); Anpassen der Lage eines motorisierten dreidimensionalen Lineartischs (23) im Detektionsgerät (2) und Wiederholen der Schritte S1, S2 und S3, um die spektrale Empfindlichkeit in anderen Positionen des Eintrittspupillendurchmessers des Großdurchmesser-Standardradiometers (3):

$$R'(\lambda) = \frac{S'_2(\lambda)}{\varphi'_1(\lambda)}$$

S5: Berechnen der spektralen Empfindlichkeit über den vollen Durchmesser des Großdurchmesser-Standardradiometers (3);

$$\overline{R_s(\lambda)} = \sum (\rho \cdot R(\lambda))/N$$

wobei *p* der Gewichtsfaktor ist und *N* die Anzahl der Messpunkte insgesamt ist;
S6: Messen und Berechnen der spektralen Empfindlichkeit eines zu messenden Großdurchmesser-Radiometers Einstellen der Ausgangswellenlänge und der spektralen Auflösung des Monochromators (14) gemäß Arbeitsbandbereich und Prüfanforderungen des zu messenden Großdurchmesser-Radiometers (6), Positionieren des Großdurchmesser-Standardradiometers (3) direct vor den austretenden Parallelstrahlen und Anpassen des Großdurchmesser-Standardradiometers (3), damit dessen optische Achse mit den austretenden Parallelstrahlen der Lichtquelle (1) übereinstimmt; der Rechner (5) steuert das Ausgangssignal St(λ) des Großdurchmesser-Standardradiometers (3) und zeichnet dieses auf, und der motorisierte Lineartisch (4) steuert den Eintrittsstrahlengang des zu messenden Großdurchmesser-Radiometers (6); nach der Anpassung:

wird das Ausgangssignal Smr(λ) des zu messenden Großdurchmesser-Radiometers (6) aufgezeichnet, anschließend wird die spektrale Empfindlichkeit des zu messenden Großdurchmesser-Radiometers (6) wie folgt ausgedrückt:

$$R_m(\lambda) = \frac{S_t(\lambda)}{S_m(\lambda)} \cdot \overline{R_s(\lambda)}.$$

2.	Verfahren zum Messen der spektralen Empfindlichkeit eines Großdurchmesser-Radiometers nach Anspruch 1, wobei die obigen Schritte S2, S3, S4 und S5 nach dem ersten Einsatz entfallen können und nach einer Nutzungsdauer wieder auszuführen sind.

3.	Verfahren zum Messen der spektralen Empfindlichkeit eines Großdurchmesser-Radiometers nach Anspruch 1, wobei die Lage des motorisierten dreidimensionalen Lineartischs (23) im Strahlabtastung-Detektionsgerät (2) im Schritt S4 derart angepasst wird, dass die Projektion des Prüfstrahls von der oberen linken Ecke des Strahlabtastungs-Detektionsgeräts (2) ausgeht, sich horizontal am weitesten hin zur rechten Seite bewegt, eine Zeile nach unten geht, und sich dann horizontal am weitesten hin zur linken Seite und dann wieder eine Zeile nach unten geht und diese Handlungen solange wiederholt, bis sich die Projektion des Prüfstrahls in die untere rechte Ecke des Strahlabtastungs-Detektionsgeräts (2) bewegt.

4.	Verfahren zum Messen der spektralen Empfindlichkeit eines Großdurchmesser-Radiometers nach einem der Ansprüche 1 - 3, wobei die Messvorrichtung die monochromatischen Großdurchmesser-Parallellichtquelle (1), das Strahlabtastung-Detektionsgerät (2), den Großdurchmesser-Standardradiometer (3), den motorisierte Lineartisch (4) und den Verarbeitungsrechner (5) umfasst;

- die Lichtquelle (1) zur Ausgabe der monochromatischen Großdurchmesser-Parallelstrahlen verwendet wird, die das Strahlabtastung-Detektionsgerät (2) durchlaufen und anschließend den Großdurchmesser-Standardradiometer (3) oder den auf dem Lineartisch (4) montierten zu messenden Radiometer (6) parallel durchlaufen;
- das Strahlabtastung-Detektionsgerät (2) zur Messung der optischen Leistung der monochromatischen Großdurchmesser-Parallelstrahlen verwendet wird;
- die Ausgänge des Strahlabtastungs-Detektionsgeräts (2), des Großdurchmesser-Standardradiometers (3) und des zu messenden Radiometers (6) an den Eingang des Rechners (5) angeschlossen sind, der zur Berechnung der spektralen Empfindlichkeit des Großdurchmesser-Standardradiometers (3) und des zu messenden Großdurchmesser-Radiometers (6) verwendet wird;

- das Messergebnis der spektralen Empfindlichkeit des Großdurchmesser-Standardradiometers (3) einen Vergleichsstandard für das Messergebnis der spektralen Empfindlichkeit des zu messenden Großdurchmesser-Radiometers (6) bereitstellt;

- der motorisierte Lineartisch (4) zur Änderung der Lage des Großdurchmesser-Standardradiometers (3) und des zu messenden Großdurchmesser-Radiometers (6) verwendet wird.

5. Verfahren zum Messen nach Anspruch 4, wobei die monochromatische Großdurchmesser-Parallellichtquelle (1) aus einer Wolfram-Halogen-Lichtquelle (11), einem Fokussiersystem (12), einem Filtersystem (13), einem Monochromator (14), einer Integrationskugel (15) und einem Kollimationssystem (16) besteht; der austretende Strahl der Lichtquelle (11) vom Fokussiersystem (12) zusammengeführt wird und in den Eingangsschlitz des Monochromators (14) eintritt, und die Blendenzahl des Fokussiersystems (12) mit der Blendenzahl des optischen Systems des Monochromators (14) übereinstimmt; der einfallende Strahl vom Monochromator (14) geteilt wird, dann den Ausgangsschlitz des Monochromators (14) durchläuft und in die Kleindurchmesser-Integrationskugel (15) mit einem Ausgang am Brennpunkt des Kollimationssystems (16) eintritt und vom Kollimationssystem (16) expandiert und anschließend in Großdurchmesser-Parallellichter umgewandelt wird, und die Blendenzahl des Kollimationssystems (16) mit der Blendenzahl des optischen Systems des Monochromators (14) übereinstimmt.

6. Verfahren zum Messen nach Anspruch 5, wobei ein Filtersystem (13) vor dem Eingangsschlitz des Monochromators (14) vorgesehen ist.

7. Verfahren zum Messen der spektralen Empfindlichkeit eines Großdurchmesser-Radiometers nach Anspruch 4, 5 oder 6, wobei das Strahlabtastung-Detektionsgerät (2) eine Membran (21), einen Standarddetektor (22) und einen motorisierten dreidimensionalen Lineartisch (23) umfasst; die Membran (21) vor dem Standarddtektor (22) angeordnet ist und zur Begrenzung der Größe des Prüfstrahls verwendet wird; der Standarddtektor die optische Leistung der Kleindurchmesser-Parallelstrahlen, die die Membran durchquert haben, erkennt; der Lineartisch (23) zur Steuerung der Lage der Membran (21) und des Standarddetektors (22) verwendet wird und einen Hub aufweist, der von der Pfadlänge der Abtastung, d.h. dem Durchmesser des austretenden Strahls der Lichtquelle (1), abhängt.

8. Verfahren zum Messen der spektralen Empfindlichkeit eines Großdurchmesser-Radiometers nach Anspruch 7, wobei der Standarddetektor (22) getrennt weg vom Strahlengang bewegt werden kann.

9. Verfahren zum Messen der spektralen Empfindlichkeit eines Großdurchmesser-Radiometers nach Anspruch 7, wobei die Membran (21) aufgrund des Eintrittspupillendurchmessers des zu messenden Großdurchmesser-Radiometers (6) ausgewählt wird.

## Revendications

1. Procédé de mesure de l'efficacité spectrale d'un radiomètre de grand diamètre qui met en œuvre une telle mesure en utilisant un dispositif de mesure de l'efficacité spectrale d'un radiomètre de grand diamètre, dans lequel le procédé comprend les étapes ci-dessous consistant à :

S1 : mesurer la puissance optique du faisceau émergent d'une source lumineuse parallèle monochromatique de grand diamètre (1) ; mettre sous tension l'alimentation électrique d'une source lumineuse tungstène-halogène (11), régler la longueur d'onde de sortie et la résolution spectrale d'un monochromateur (14), placer un dispositif de détection à balayage de faisceau (2) juste devant des faisceaux parallèles émergents et ajuster le dispositif de détection à balayage de faisceau (2) de sorte que les faisceaux parallèles traversent un diaphragme (21) de manière verticale ; dans lequel un ordinateur de traitement (5) commande la puissance optique $\varphi_1(\lambda)$, telle que détectée par un détecteur standard (22), des faisceaux parallèles de petit diamètre qui ont traversé le diaphragme (21) ; S2 : mesurer le signal de sortie du radiomètre de grand diamètre standard (3) ; ajuster le détecteur standard (22) dans le dispositif de détection à balayage de faisceau (2) de sorte qu'il est déplacé hors du trajet optique, auquel cas les faisceaux parallèles de petit diamètre qui ont traversé le diaphragme (21) entrent dans le radiomètre de grand diamètre standard (3) d'une telle manière que son diamètre et sa position sont identiques à ceux du faisceau tel que décrit à l'étape S1, et l'ordinateur de traitement (5) commande le signal de sortie $S_2(\lambda)$ du radiomètre de grand diamètre standard (3) ;

S3 : mesurer et calculer l'efficacité spectrale dans le cadre de l'éclairage des faisceaux parallèles de petit diamètre d'un radiomètre de grand diamètre standard (3) ;

dans lequel, selon les étapes S1 et S2, l'efficacité spectrale d'un radiomètre de grand diamètre standard (3) dans le cadre de l'éclairage des faisceaux parallèles de petit diamètre peut être calculée comme suit :

$$R(\lambda) = \frac{S_2(\lambda)}{\varphi_1(\lambda)}$$

S4 : ajuster la position du dispositif de détection à balayage de faisceau (2) et mesurer l'efficacité spectrale à d'autres positions dans le diamètre de pupille d'entrée du radiomètre de grand diamètre standard (3) ; ajuster la position d'un étage de translation tridimensionnelle motorisé (23) dans le dispositif de détection à balayage de faisceau (2) et répéter les étapes S1, S2 et S3 pour obtenir l'efficacité spectrale à d'autres positions dans le diamètre de pupille d'entrée du radiomètre de grand diamètre standard (3) :

$$R'(\lambda) = \frac{S'_2(\lambda)}{\varphi'_1(\lambda)}$$

S5 : calculer l'efficacité spectrale de diamètre complet du radiomètre de grand diamètre standard (3) :

$$\overline{R_s(\lambda)} = \sum (\rho \cdot R(\lambda))/N$$

où « p » est le facteur de pondération et «N» est le nombre total de points de mesure ; S6 : mesurer et calculer l'efficacité spectrale d'un radiomètre de grand diamètre à mesurer (6) ; et régler la longueur d'onde de sortie et la résolution spectrale du monochromateur (14) selon les exigences de plage de bande de travail et exigences de test du radiomètre de grand diamètre à mesurer (6), placer le radiomètre de grand diamètre standard (3) juste devant les faisceaux parallèles émergents et ajuster le radiomètre de grand diamètre standard (3) de sorte que son axe optique est conforme aux faisceaux parallèles émergents de la source lumineuse parallèle monochromatique de grand diamètre (1) ; dans lequel l'ordinateur de traitement (5) commande et enregistre le signal de sortie $S_t(\lambda)$ du radiomètre de grand diamètre standard (3), et l'étage de translation motorisé (4) commande le trajet optique d'entrée du radiomètre de grand diamètre à mesurer (6) ; dans lequel, après l'ajustement, le signal de sortie $S_m(\lambda)$ du radiomètre de grand diamètre à mesurer (6) est enregistré, et ensuite l'efficacité spectrale du radiomètre de grand diamètre à mesurer (6) est exprimée par :

$$R_m(\lambda) = \frac{S_t(\lambda)}{S_m(\lambda)} \cdot \overline{R_s(\lambda)}$$

2. Procédé de mesure de l'efficacité spectrale d'un radiomètre de grand diamètre selon la revendication 1, dans lequel les étapes S2, S3, S4 et S5 ci-dessus peuvent être omises après la première utilisation, et doivent être mises à nouveau en œuvre après une période d'utilisation.

3. Procédé de mesure de l'efficacité spectrale d'un radiomètre de grand diamètre selon la revendication 1, dans lequel la position de l'étage de translation tridimensionnelle motorisé (23) dans le dispositif de détection à balayage de faisceau (2) à l'étape S4 est ajustée de telle manière que la projection du faisceau de test commence à partir du coin supérieur gauche du dispositif de détection à balayage de faisceau (2), se déplace horizontalement le plus loin vers le côté droit, se déplace d'une ligne vers le bas, et se déplace ensuite horizontalement le plus loin vers le côté gauche, puis se déplace d'une autre ligne vers le bas, et on répète ces actions jusqu'à ce que la projection du faisceau de test se déplace vers le coin inférieur droit du dispositif de détection à balayage de faisceau (2).

4. Procédé de mesure de l'efficacité spectrale d'un radiomètre de grand diamètre selon l'une quelconque des revendications 1 à 3, dans lequel le dispositif de mesure comprend la source lumineuse parallèle monochromatique de grand diamètre (1), le dispositif de détection à balayage de faisceau (2), le radiomètre de grand diamètre standard (3), l'étage de translation motorisé (4) et l'ordinateur de traitement (5) ;

- ladite source lumineuse parallèle monochromatique de grand diamètre (1) est utilisée en vue de fournir en sortie les faisceaux parallèles monochromatiques de grand diamètre qui traversent le dispositif de détection à balayage de faisceau (2) et traversent ensuite le radiomètre de grand diamètre standard (3) ou le radiomètre de grand diamètre à mesurer (6) monté sur l'étage de translation motorisé (4) ;
- ledit dispositif de détection à balayage de faisceau (2) est utilisé en vue de mesurer la puissance optique desdits faisceaux parallèles monochromatiques de grand diamètre ;

- les sorties dudit dispositif de détection à balayage de faisceau (2), dudit radiomètre de grand diamètre standard (3) et dudit radiomètre de grand diamètre à mesurer (6) sont connectées à l'entrée dudit ordinateur de traitement (5) qui est utilisé en vue de calculer l'efficacité spectrale dudit radiomètre de grand diamètre standard (3) et dudit radiomètre de grand diamètre à mesurer (6) ;

- le résultat de mesure de l'efficacité spectrale dudit radiomètre de grand diamètre standard (3) fournit un étalon de comparaison pour le résultat de mesure de l'efficacité spectrale dudit radiomètre de grand diamètre à mesurer (6) ;

- ledit étage de translation motorisé (4) est utilisé en vue de modifier les positions dudit radiomètre de grand diamètre standard (3) et dudit radiomètre de grand diamètre à mesurer (6).

5. Procédé de mesure de l'efficacité spectrale d'un radiomètre de grand diamètre selon la revendication 4, dans lequel ladite source lumineuse parallèle monochromatique de grand diamètre (1) est composée d'une source lumineuse tungstène-halogène (11), d'un système de focalisation (12), d'un système de filtre (13), d'un monochromateur (14), d'une sphère d'intégration (15) et d'un système de collimation (16) ; le faisceau émergent de la source lumineuse tungstène-halogène (11) est convergé par le système de focalisation (12) et entre ensuite dans la fente d'entrée du monochromateur (14), et le nombre d'ouverture dudit système de focalisation (12) correspond au nombre d'ouverture du système optique dudit monochromateur (14) ; le faisceau incident est divisé par le monochromateur (14), et traverse ensuite la fente de sortie du monochromateur (14) et entre dans la sphère d'intégration de petit diamètre (15) avec une sortie située au point focal du système de collimation (16), et est élargi par le système de collimation (16) puis converti en lumières parallèles de grand diamètre, et le nombre d'ouverture dudit système de collimation (16) correspond au nombre d'ouverture du système optique dudit monochromateur (14).

6. Procédé de mesure de l'efficacité spectrale d'un radiomètre de grand diamètre selon la revendication 5, dans lequel un système de filtre (13) est fourni devant la fente d'entrée dudit monochromateur (14).

7. Procédé de mesure de l'efficacité spectrale d'un radiomètre de grand diamètre selon la revendication 4 ou 5 ou 6, dans lequel ledit dispositif de détection à balayage de faisceau (2) comprend un diaphragme (21), un détecteur standard (22) et un étage de translation tridimensionnelle motorisé (23) ; ledit diaphragme (21) est situé devant le détecteur standard (22) et est utilisé en vue de limiter la taille du faisceau de test ; ledit détecteur standard détecte la puissance optique des faisceaux parallèles de petit diamètre qui ont traversé le diaphragme ; ledit étage de translation tridimensionnelle motorisé (23) est utilisé en vue de commander la position du diaphragme (21) et du détecteur standard (22), et présente une course qui dépend de la longueur de trajet du balayage, autrement dit, du diamètre du faisceau émergent de la source lumineuse parallèle monochromatique de grand diamètre (1).

8. Procédé de mesure de l'efficacité spectrale d'un radiomètre de grand diamètre selon la revendication 7, dans lequel ledit détecteur standard (22) peut être déplacé séparément hors du trajet optique.

9. Procédé de mesure de l'efficacité spectrale d'un radiomètre de grand diamètre selon la revendication 7, dans lequel ledit diaphragme (21) est sélectionné sur la base du diamètre de pupille d'entrée du radiomètre de grand diamètre à mesurer (6).

**FIG. 1**

**FIG. 2**

**FIG. 3**

**FIG. 4**

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102829868 A
- CN 102519594 A
- CN 105571834 A
- CN 102486404 A

**Non-patent literature cited in the description**

- **SKEROVIC V et al.** *Developement of the method for realization of spectral irradiance scale featuring system of spectral comparisons*